# EUROPÄISCHE PATENTSCHRIFT

(11) **EP 2 191 988 B1**
(45) Veröffentlichungstag und Bekanntmachung des Hinweises auf die Patenterteilung: **02.10.2013**
(21) Anmeldenummer: 09450224.2
(22) Anmeldetag: 26.11.2009
(51) Int. Cl.: B60D 1/32, B62D 13/02

(54) **Zwangslenkung**
Forced steering
Direction forcée

(30) Priorität: 26.11.2008 AT 18482008
(43) Veröffentlichungstag der Anmeldung: 02.06.2010
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte OG

(56) Entgegenhaltungen:
- EP-A- 1 352 808
- EP-A- 1 932 747
- DE-A1- 3 919 561
- DE-U1-202004 001 249
- FR-A1- 2 753 161

## Beschreibung

Die Erfindung betrifft eine Zwangslenkung gemäß dem Oberbegriff des Patentanspruches 1. Herkömmliche Zugfahrzeuge weisen eine Kupplungsvorrichtung auf, beispielsweise einen Kupplungszapfen oder eine Kupplungskugel, welche zum Anhängen einer Zugstange des Fahrzeuganhängers und zur Übertragung der Zugkräfte vom Zugfahrzeug zum Fahrzeuganhänger vorgesehen ist. Zur Zwangslenkung von zwangsgelenkten Rädern bzw. Achsen des Fahrzeuganhängers ist neben der Kupplungsvorrichtung des Zugfahrzeugs eine Lenkvorrichtung zur Ausbildung des ersten Anlenkpunkts vorgesehen. Diese Lenkvorrichtung kann beispielsweise ebenfalls als Zapfen oder Kugel ausgebildet sein und kann dabei als Lenkzapfen bzw. als Lenkkugel bezeichnet werden.

Wenn ein Gespann aus Zugfahrzeug und Fahrzeuganhänger in eine Kurve fährt, wird die Lenkvorrichtung ortsfest mit dem Zugfahrzeug mitbewegt und verändert dabei die relative Lage zum Fahrzeuganhänger. Zwischen dem Zugfahrzeug und dem Fahrzeuganhänger ist dabei ein - insbesondere beim Fahren veränderlicher - Winkel ausgebildet. Dieser Winkel beträgt in der Geradeausfahrt 0° und beträgt, wenn das Zugfahrzeug quer zum Fahrzeuganhänger steht, 90°, insbesondere plus oder minus 90° bei herkömmlichem Drehsinn. Dieser veränderliche Winkel zwischen dem Zugfahrzeug und dem Fahrzeuganbänger wird beim Zwangslenken zwangsgelenkter Räder ausgenützt. Herkömmlicherweise ist dazu an der Lenkvorrichtung ein Zwangslenkzylinder befestigt, welcher - entsprechend dem Winkel zwischen Zugfahrzeug und Fahrzeuganhänger - zum Zwangslenken ausgefahren oder eingefahren wird. Der Zwangslenkzylinder bewegt dabei üblicherweise eine Hydraulikflüssigkeit, welche in Wirkverbindung mit wenigstens einem Nehmerzylinder lenkbarer Achsen des Fahrzeuganhängers steht. Mittels der Hydraulikflüssigkeit beeinflusst der Zwangslenkzylinder die Stellung des Nehmerzylinders bzw. der Nehmerzylinder und bewirkt derart das Auslenken der lenkbaren Räder an wenigstens einer Achse des Fahrzeuganhängers, wobei diese Räder zwangsgelenkt sind. Nachteilig dabei ist, dass der Zwangslenkzylinder einen hohen Raumbedarf hat und ein hohes Gewicht aufweist. Insbesondere wenn der Fahrzeuganhänger häufig an und abgekuppelt wird, ist dabei der Montageaufwand der Zwangslenkung hoch. Des Weiteren kann der Zwangslenkzylinder den maximal möglichen Winkel zwischen Zugfahrzeug und Fahrzeuganhänger - insbesondere aufgrund des hohen Raumbedarfs des Zwangslenkzylinders - deutlich eingrenzen, wobei zu verhindern ist, dass eine Stelle des Zwangslenkzylinders an ein Bauteil des Zugfahrzeuges oder des Fahrzeuganhängers anstößt.

Die EP 1 932 747 A offenbart eine Zwangslenkung für einen Anhänger mit zwei beabstandeten Anlenkpunkten gemäß dem Oberbegriff des Anspruchs 1.

Auch aus der EP 1 352 808 A, der FR 2 753 161 A1, der DE 39 19 561 A1 und der DE 20 2004 00129 U1 sind Zwangslenkungen für einen Anhänger bekannt.

Aufgabe der Erfindung ist es daher eine Zwangslenkung der eingangs genannten Art anzugeben, mit welcher die genannten Nachteile vermieden werden können, welche zuverlässig, fehlerunanfällig, schmutzresistent sowie einfach und schnell am Zugfahrzeug anmontiert und vom Zugfahrzeug abmontiert werden kann und mit welcher der maximale Winkel zwischen dem Zugfahrzeug und dem Fahzreuganhänger - gegenüber einem Fahrzeuganhänger ohne Zwangslenkungssystem - nicht eingegrenzt ist.

Erfindungsgemäß wird dies durch die Merkmale des Patentanspruches 1 erreicht.

Dadurch ergibt sich der Vorteil, dass die Geometrie des Zwangslenkungssystems wesentlich flexibler gestaltet werden kann. Vorteilhaft dabei ist, dass dadurch der Raumbedarf des Zwangslenkungssystems - wenigstens im Bereich welcher zur Montage am Zugfahrzeug vorgesehen ist - deutlich reduziert werden kann, womit in der Geometrie des Zwangslenkungssystems besser auf die räumlichen Gegebenheiten zwischen dem Zugfahrzeug und dem Fahrzeuganhänger eingegangen werden kann. Vorteilhaft dabei ist, dass der maximal mögliche Winkel zwischen dem Zugfahrzeug und dem Fahrzeuganhänger gegenüber dem maximal möglichen Winkel zwischen dem Zugfahrzeug und einem Fahrzeuganhänger ohne Zwangslenkung nicht eingeschränkt ist, also im Wesentlichen gleich groß ausgebildet sein kann. Vorteilhafterweise kann dabei ein geringer Wendekreis des Gespanns gewährleistet werden.

Dadurch ergibt sich weiters der Vorteil, dass die Lenkelemente - insbesondere das erste Lenkelement - mit geringem Gewicht ausgebildet sein können. Vorteilhaft dabei ist, dass die Montage und die Demontage des ersten Lenkelements an der den ersten Anlenkpunkt ausbildenden Lenkvorrichtung des Zugfahrzeuges einfach und ohne großen Kraftaufwand erfolgen kann. Vorteilhafterweise kann der Fahrzeuganhänger dabei in kurzer Zeit am Zugfahrzeug angekuppelt bzw. vom Zugfahrzeug abgekuppelt werden. Dies kann insbesondere beim häufigen Wechseln des Zugfahrzeuges und/oder des Zugfahrzeuganhängers von Vorteil sein.

Dadurch ergibt sich ebenfalls der Vorteil, dass das Zwangslenkungssystem zuverlässig, fehlerunanfällig und schmutzresistent ausgebildet sein kann. Vorteilhaft dabei ist, dass das Zwangslenkungssystem dabei wartungsextensiv ausgebildet sein kann, wobei das vorteilhafte Zwangslenkungssystem insbesondere gegenüber dem herkömmlichen Zwangslenkzylinder einen verringerten Wartungsaufwand aufweisen kann. Insbesondere kann dabei der zweite Anlenkpunkt an einer schmutzgeschützten Stelle des Fahrzeuganhängers vorgesehen sein, wobei schutzanfällige Bauteile des Zwangslenkungssystems insbesondere im Bereich des zweite Anlenkpunkt angeordnet werden können und derart besser vor Schmutz geschützt sind. Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben.

Dabei zeigt:
Fig. 1 eine Seitenansicht auf das zweite Lenkelement der Zwangslenkung einer bevorzugten ersten Ausführungsform und eine Zugstange des Fahrzeuganhängers;
Fig. 2 eine Draufsicht auf die Zwangslenkung gemäß Fig. 1 und die Zugstange gemäß Fig. 1;
Fig. 3 eine Draufsicht auf einen ersten Flüssigkeitsbehälter, welcher geöffnet und schematisch dargestellt ist;
Fig. 4 eine Draufsicht auf den ersten Flüssigkeitsbehälter der Fig. 3, welcher geschlossen dargestellt ist;
Fig. 5 in Draufsicht das erste Lenkelement, das zweite Lenkelement und die Zugstange gemäß Fig. 2, wobei das erste Lenkelement und das zweite Lenkelement gemäß einer Geradeausfahrt von Zugfahrzeug und Fahrzeuganhänger angeordnet sind;
Fig. 6 in Draufsicht schematisch die Teile gemäß Fig. 5, wobei das erste Lenkelement und das zweite Lenkelement gemäß einer Kurvenfahrt von Zugfahrzeug und Fahrzeuganhänger nach rechts angeordnet sind;
Fig. 7 in Draufsicht schematisch die Teile gemäß Fig. 5, wobei das erste Lenkelement und das zweite Lenkelement gemäß einer Kurvenfahrt von Zugfahrzeug und Fahrzeuganhänger nach links angeordnet sind;
Fig. 8 in Draufsicht die Teile gemäß Fig. 5, wobei die erste Anlenkvorrichtung an einem Fixierelement fixiert ist;
Fig. 9 in Seitenansicht die Zugstange gemäß Fig. 1 und das zweite Lenkelement der Zwangslenkung sowie einen mit dem zweiten Lenkelement verbundenen Geberzylinder einer vorteilhaften dritten Ausführungsform der Zwangslenkung;
Fig. 10 in Seitenansicht die Zugstange gemäß Fig. 1 und das zweite Lenkelement der Zwangslenkung sowie einen mit dem zweiten Lenkelement verbundenen Geberzylinder einer vorteilhaften vierten Ausführungsform der Zwangslenkung;
Fig. 11 eine Frontansicht des zweiten Lenkelementes gemäß Fig. 10; und
Fig. 12 eine Draufsicht auf das zweite Lenkelement gemäß Fig. 10.

In der Beschreibung wird der Begriff mechanische Signale zur Unterscheidung von optischen Signalen und elektrischen Signalen verwendet und es umfasst der Begriff mechanische Signale Signale, die mittels Flüssigkeiten übertragen werden.

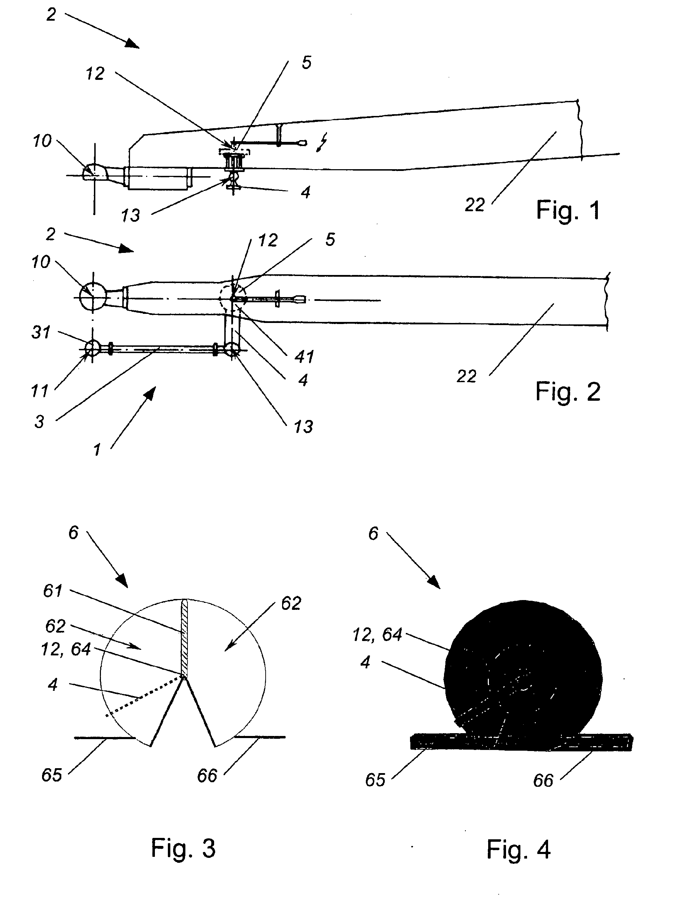

Die Fig. 1 bis 12 zeigen wenigstens Teile einer Zwangslenkung 1 für die Lenkung eines an ein Zugfahrzeug gekuppelten Fahrzeuganhängers 2, mit einem ersten Anlenkpunkt 11, welcher ortsfest in Bezug auf das Zugfahrzeug ist, und einem zweiten Anlenkpunkt 12, welcher ortsfest in Bezug auf den Fahrzeuganhänger 2 ist, wobei ein erstes Lenkelement 3 eine erste Anlenkvorrichtung 31 zum Angreifen an dem ersten Anlenkpunkt 11 aufweist. Zur raumschonenden Anordnung der Zwangslenkung 1, zur zuverlässigen, fehlerunanfälligen und schmutzresistenten Ausbildung und dazu, dass die Zwangslenkung einfach und schnell am Zugfahrzeug anmontiert und vom Zugfahrzeug abmontiert werden kann, wird vorgeschlagen, dass in einem ersten festen Abstand von der ersten Anlenkvorrichtung 31 das erste Lenkelement 3 unter Ausbildung eines Drehpunktes 13 drehbar mit einem zweiten Lenkelement 4 verbunden ist und das zweite Lenkelement 4 in einem zweiten festen Abstand von dem Drehpunkt 13 eine zweite Anlenkvorrichtung 41 zum Angreifen mit dem zweiten Anlenkpunkt 12 aufweist.

Vorteilhaft dabei ist, dass diese Bauteile der Zwangslenkung 1 aus einfachen Stahlteilen herstellbar sind und nicht als Hydraulikzylinder ausgebildet sind. Dies ermöglicht die eingangs genannten Vorteile und vorteilhaften Wirkungen.

Zur Ausbildung eines Gespanns umfassend den Fahrzeuganhänger 2 und das Zugfahrzeug ist der Fahrzeuganhänger 2 mittels einer Zugvorrichtung, insbesondere einer Zugstange 22, des Fahrzeuganhängers 2 am Zugfahrzeug angekuppelt. Zwischen dem Zugfahrzeug und dem Fahrzeuganhänger 2 ist dabei ein Winkel ausgebildet, welcher Winkel in der Geradeausfahrt 0° beträgt und, wenn das Zugfahrzeug quer zum Fahrzeuganhänger 2 steht, plus oder minus 90° beträgt, wobei die übliche Winkelmessung im Uhrzeigersinn vorgesehen ist.

Die Zugstange 22 ist ortfest am Fahrzeuganhänger 2 angeordnet und kann insbesondere mit weiteren - den Fahrzeuganhänger 2 ausbildenden - Bauteilen lagefest verschweißt und/oder verschraubt sein. Der zweite Anlenkpunkt 12, welcher ortsfest in Bezug auf den Fahrzeuganhänger 2 ist, ist somit auch ortsfest in Bezug auf die Zugstange 22 des Fahrzeuganhängers 2.

Die Zugstange 22 kann - wie dargestellt - im Wesentlichen gerade ausgebildet sein. Die derartige Zugstange 22 kann als Deichsel bezeichnet werden. Insbesondere kann die Deichsel ein Deichselrohr umfassen und derart wenigstens bereichsweise hohl ausgebildet sein.

Bei einer anderen Ausgestaltung des Fahrzeuganhängers 2 kann die Zugstange 22 V-förmig ausgebildet sein, welches insbesondere bei einem als Traktoranhänger ausgebildeten Fahrzeuganhänger 2 der Fall sein kann. In diesem Zusammenhang kann die Zugstange 22 auch als V-Deichsel bezeichnet werden.

Die Zwangslenkung 1, welche auch als Zwangslenkungssystem oder als Vorrichtung zum Zwangslenken bezeichnet werden kann, umfasst dabei jene Bauteile, welche zum Zwangslenken zwangsgelenkter Räder vorgesehen sind. Diese Bauteile sind hiezu - in Wirkabfolge gesehen - zwischen dem ersten Anlenkpunkt 11 und den zwangsgelenkten Rädern angeordnet. Vorteilhaft dabei ist, dass die Zwangslenkung 1 im Wesentlichen drei Einheiten umfasst. In der ersten Einheit wird der Winkel zwischen Zugfahrzeug und

Fahrzeuganhänger 2 gemäß einer vorbestimmbaren Übertragungsfunktion an einen ortsfest in Bezug auf den Fahrzeuganhänger 2 angeordneten Bereich, erfindungsgemäß den zweiten Anlenkpunkt 12, übertragen. Das erste Lenkelement 3 und das zweite Lenkelement 4 stellen dabei im Wesentlichen sicher, dass die Winkelinformation vom ersten Anlenkpunkt 11 an den zweiten Anlenkpunkt 12 übertragen wird.

Das erste Lenkelement 3 und das zweite Lenkelement 4 können hiezu im Wesentlichen stangenförmig, insbesondere - wie dargestellt - im Wesentlichen geradlinig stangenförmig, ausgebildet sein. Je nach den Platzverhältnissen zwischen dem Zugfahrzeug und dem Fahrzeuganhänger 2 können erstes Lenkelement 3 und/oder zweites Lenkelement 4 von der geradlinigen Geometrie abweichende Geometrien aufweisen. Insbesondere können das erste Lenkelement 3 und/oder das zweite Lenkelement 4 gebogen, s-förmig, 1-förmig, winkelförmig oder eine komplexere dreidimensionale Geometrie aufweisen.

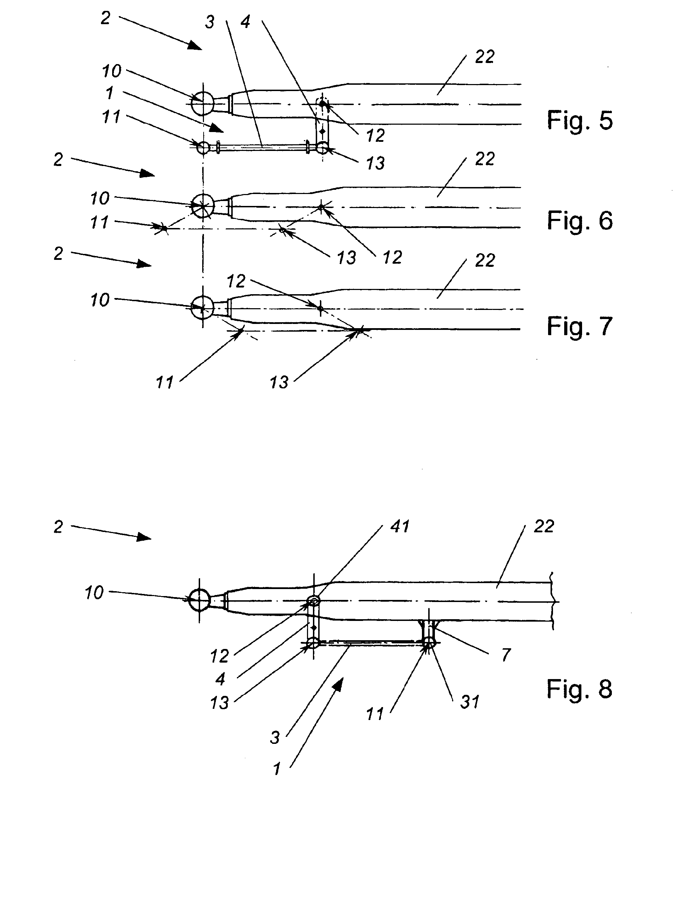

Wie in Fig. 5 bis 7 dargestellt kann insbesondere vorgesehen sein, dass ein Kupplungspunkt 10, der erste Anlenkpunkt 11, der Drehpunkt 13 und der zweite Anlenkpunkt 12 an Ecken eines gedachten Vierecks angeordnet sind. Insbesondere können in der Draufsicht auf das gedachte Viereck - und wie dargestellt - die vier Punkte ein Rechteck mit ausbilden und sich zur Betätigung der Zwangslenkung 1 im Wesentlichen, wie bei einem gedachten Parallelogramm verschieben. Dieses gedachte Parallelogramm ist in Draufsicht auf dieses und in Draufsicht auf den Fahrzeuganhänger 2 schematisch mittels strichpunktierter Linien in Fig. 5, 6 und 7 dargestellt. Die Stellung des ersten Lenkelements 3 und des zweiten Lenkelements 4 in Fig. 5 entspricht dabei dem Geradeauslauf des Gespanns. Die Stellung des ersten Lenkelements 3 und des zweiten Lenkelements 4 in Fig. 6 entspricht dabei einer Kurvenfahrt in einer Rechtskurve. Die Stellung des ersten Lenkelements 3 und des zweiten Lenkelements 4 in Fig. 5 entspricht dabei der Kurvenfahrt in einer Linkskurve. Damit die parallelogrammförmige Verschiebung gewährleistet ist, ist vorgesehen, dass der Abstand des zweiten Anlenkpunkts 12 zum Drehpunkt 13 entsprechend und gleich dem Abstand das Kupplungspunktes 10 zum ersten Anlenkpunkt 11 gewählt ist. Insbesondere kann dabei die Länge des zweiten Lenkelements 4 im Wesentlichen dem Abstand des Kupplungspunktes 10 zum ersten Anlenkpunkt 11 entsprechen, womit das zweite Lenkelements 4 lediglich gering länger ist, als eine den zweiten Anlenkpunkt 12 und den Drehpunkt 13 verbindende Linie.

Vorteilhafterweise kann dabei vorgesehen sein, dass das durch die vier Punkte gebildete gedachte Rechteck im Wesentlichen in einer Ebene ausgebildet ist. Diese Ebene kann vorbestimmbar angeordnet sein. Insbesondere kann diese Ebene - welche als Wirkebene der ersten Einheit bezeichnet werden kann - horizontal, welches dargestellt ist, oder vertikal angeordnet sein. Auch kann diese Wirkebene zur Horizontalebne bzw. Vertikaleben geneigte Wirkebenen geneigt sein.

Im Bereich des zweiten Anlenkpunkts 12 erfolgt dabei die Umwandlung der Winkelinformation in ein Signal zum Ansteuern zwangslenkbarer Räder mittels der zweiten Einheit. Die - wie vorstehend beschrieben - von der ersten Einheit zum zweiten Anlenkpunkt 12 übertragene Winkelinformation kann dabei in ein optisches Signal, in ein elektrisches Signal und/oder in ein mechanisches Signal zum Zwangslenken umgewandelt werden. Das Signal kann dabei als Zwangslenksignal bezeichnet werden. Das mechanische Signal kann insbesondere als Druck, bevorzugt als hydraulischer Druck, ausgebildet sein, wie dies beispielsweise bei Hydraulikzylindern der Fall ist.

Sofern die zweite Einheit die Winkelinformation in ein elektrisches Signal umwandelt, kann die zweite Einheit hiebei als Detektor 5 bezeichnet werden. Sofern die zweite Einheit die Winkelinformation in ein mechanisches Signal umwandelt, kann die zweite Einheit hiebei als Geber bezeichnet werden und kann beispielsweise als Geberzylinder 8 oder als erster Flüssigkeitsbehälter 6 - ausgebildet sein.

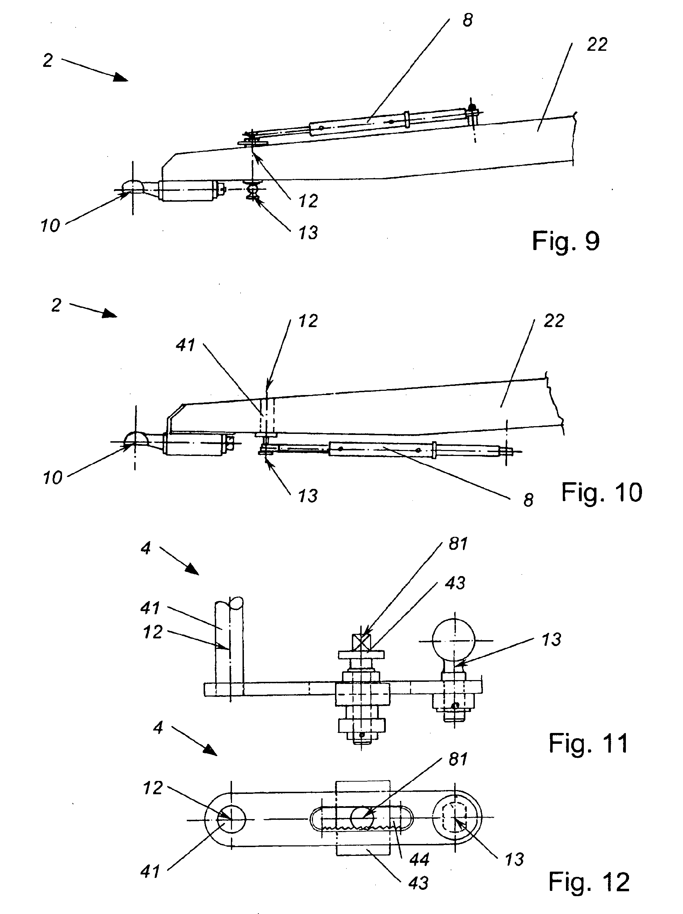

Der Geberzylinder 8 ist derart ausgebildet, dass eine lineare Bewegung eines Kolbens des Geberzylinders 8 ein Fluid, insbesondere Flüssigkeit, insbesondere ein inkompressibles Fluid, bewegt. Der Geberzylinder 8 ist schematisch in Fig. 9 und 10 dargestellt. Der erste Flüssigkeitsbehälter 6 ist derart ausgebildet, dass eine Drehbewegung eines Kolbenelements 61 des ersten Flüssigkeitsbehälters 6 das Fluid bewegt. Der erste Flüssigkeitsbehälter 6 ist schematisch in Fig. 3 und 4 dargestellt. In diesem Sinne sind der erste Flüssigkeitsbehälter 6 und der Geberzylinder 8 wirkungsäquivalent. In Weiterbildung können von der Zwangslenkung 1 wenigstens ein Geberzylinder 8 und wenigstens ein erster Flüssigkeitsbehälter 6 umfasst sein.

In einer dritten Einheit der Zwangslenkung 1 wird das Signal an wenigstens eine Einstellvorrichtung, insbesondere an wenigstens einen Nehmerzylinder, zur Verdrehung von Rädern des Fahrzeuganhängers 2 weitergeleitet. Das Signal erwirkt hiebei eine vorbestimmbare Stellung der Einstellvorrichtung, welche als Aktuator bezeichnet werden kann. Die vorbestimmbare Stellung der Einstellvorrichtung bewirkt wiederum die vorbestimmbare Verdrehung der zwangslenkbaren Räder des Fahrzeuganhängers 2. Vorteilhaft dabei ist, dass dabei die Übertragungsfunktion der Zwangslenkung 1 besonders einfach verändert werden kann, insbesondere einfacher als dies bei herkömmlichen Zwangslenkungssystemen der Fall ist.

Zwangsgelenkte Räder sind an wenigstens einer lenkbaren Achse vorgesehen. Dabei kann das Signal zum Ansteuern von 2, 4, 6 oder mehr Rädern dienen. Der Begriff Rad umfasst dabei auch sogenannte Doppel- oder Mehrfachräder bzw. -reifen, bei welchen zwei oder mehr Reifen-Felgen-Kombinationen zu einem Doppel- bzw. Mehrfachrad kombiniert werden.

Vorteilhafterweise kann vorgesehen sein, dass der Detektor 5 zur Detektion der Position des zweiten Lenkelementes 4 relativ zum zweiten Anlenkpunkt 12 vorgesehen ist, und dass der Detektor 5 mit der Einstellvorrichtung zur Verdrehung von Rädern des Fahrzeuganhängers 2 wirkverbunden ist. Das vom Detektor 5 erzeugte elektrische Signal kann hiebei optisch, elektrisch oder per Funk vom Detektor an die Einstellvorrichtung übertragen werden. Der Detektor 5 ist unter anderem bei der in Fig. 1 und 2 dargestellten ersten Ausführungsform des Zwangslenkungssystems vorgesehen, wobei die Wirkverbindung hiebei mittels eines Kabels ausgebildet ist.

Insbesondere kann der Detektor 5 fest mit der zweiten Anlenkvorrichtung 41 verbunden sein.

Vorteilhaft ist, dass Detektoren 5 besonders platzsparend, besonders günstig, mit besonders geringem Gewicht und besonders robust gebaut sein können. Geeignete Detektoren 5 können die Position des zweiten Lenkelementes 4 relativ zum zweiten Anlenkpunkt 12 unter anderem optisch mittels Messmarken, magnetisch, beispielsweise mittels Induktionsaufnehmern, durch Erfassung der Positionsänderung des zweiten Lenkelementes 4 bestimmen.

Die Einstellvorrichtung kann hiebei elektrisch mit Strom und/oder mechanisch, insbesondere mit pneumatischem und/oder hydraulischem Druck, vom Zugfahrzeug versorgt werden. Gemäß dem von der Einstellvorrichtung empfangenen Signal wird hiebei die Einstellvorrichtung vorbestimmbar bewegt, wodurch die zwangsgelenkten Räder verdreht werden und wobei die, zum Verdrehen der Räder, benötigte Leistung zuverlässig aus der elektrischen oder mechanischen Versorgung des Zugfahrzeuges entnommen werden. Dies gewährleistet die zuverlässige Verdrehung der Räder, wobei auch nichtlineare Übertragungsfunktionen der Zwangslenkung 1 abgebildet werden können und wobei die Zwangslenkungs-Übertragungsfunktion, also der Räderverdrehungswinkel pro Grad zwischen Zugfahrzeug und Fahrzeuganhänger, auch laufend insbesondere situationsabhängig, bevorzugt auch während der Fahrt des Gespanns, gemäß Anpassungsparametern vorbestimmbar angepasst werden kann. Geeignete Anpassungsparameter können unter anderem Geschwindigkeit des Gespanns und/oder Neigung des Zugfahrzeuges, des Fahrzeuganhängers 2 oder des Gespanns und/oder Achslast des Fahrzeuganhängers 2 sein. In der Zwangslenkung 1, insbesondere in der Einstellvorrichtung, können hiezu verschiedene Kennlinien vorab eingespeichert werden und - situationsabhängig - kann aus diesen Kennlinien eine für die Situation vorteilhafte ausgewählt werden. Zwangslenkungs-Übertragungsfunktion kann beispielsweise in einem Diagramm dargestellt werden und kann als Kennlinie der Zwangslenkung 1 bezeichnet werden.

Die Zwangslenkungs-Übertragungsfünktion kann in vorteilhafter Weise linear und/oder nicht-linear ausgebildet sein. Insbesondere kann die Zwangslenkungs-Übertragungsfunktion situationsabhängig entweder vorbestimmbar linear oder - in weiteren Situationen - vorbestimmbar nicht-linear ausgebildet sein.

Für eine Vorbestimmung der vorbestimmbaren Zwangslenkungs-Übertragungsfunktion können unter anderem die folgenden Parameter relevant sein: Achsabstand von Vorderachse zu Hinterachse des Zugfahrzeuges, Spurbreites des Zugfahrzeuges, Spurbreites des Fahrzeuganhängers 2, Abstand Hinterradachse des Zugfahrzeugs zum Kupplungspunkt 10 und/oder Abstand der Achsen des Fahrzeuganhängers 2 zum Kupplungspunkt 10.

Bei der besonders bevorzugten zweiten Ausführungsform der Zwangslenkung 1 - welche in Fig. 3 und 4 dargestellt ist - ist in vorteilhafter Weise vorgesehen, dass mit dem zweiten Lenkelement 4 zumindest ein erstes Kolbenelement 61 verbunden ist, dass das erste Kolbenelement 61 bewegbar in einem ersten Flüssigkeitsbehälter 6 angeordnet ist und ein Innenvolumen des ersten Flüssigkeitsbehälters 6 in zwei Bereiche 62 unterteilt, und dass zur Verdrehung von Rädern des Fahrzeuganhängers 2 mit den beiden Bereichen 62 Nehmerzylinder wirkverbunden sind. Bei einer Bewegung, insbesondere der Verdrehung, des zweiten Lenkelements 4 wird das Kolbenelement 61 ebenso bewegt, insbesondere im Inneren des Flüssigkeitsbehälters 6 derart verdreht, so dass ein erstes Volumen in einem der beiden zweiten Bereiche 62 verkleinert und gleichzeitig ein zweites Volumen in einem anderen der beiden zweiten Bereiche 62 vergrößert wird. Da diese Volumina mit - im Wesentlichen inkompressibler - Flüssigkeit befüllt sind, wird die Flüssigkeit entweder in eine ersten Verbindungsleitung 65 hinausgedrängt und aus einer zweiten Verbindungsleitung 66 hereingezogen oder in die zweite Verbindungsleitung 66 hinausgedrängt und aus der ersten Verbindungsleitung 65 hereingezogen. Diese Flüssigkeitsbewegung kann insbesondere die Wirkverbindung zu wenigstens einem Nehmerzylinder zur Verdrehung von Rädern des Fahrzeuganhängers 2 ausbilden. Vorteilhaft am ersten Flüssigkeitsbehälter 6 ist, dass dieser besonders raumsparend in Bereich der Zugstange 22 anordenbar ist und besonders einfach montiert und demontiert, also ausgewechselt, werden kann.

Insbesondere kann vorgesehen sein, dass das zweite Lenkelement 4 im Bereich einer Verdrehachse 64 des ersten Flüssigkeitsbehälters 6 mit dem Kolbenelement 61 verbunden ist, wobei das Kolbenelement 61 verdrehbar um die Verdrehachse 64 gelagert ist. Insbesondere kann vorgesehen sein, dass die Verdrehachse 64 durch den zweiten Anlenkpunkt 12 verläuft, womit das Kolbenelement 61 zuverlässig mit der Verdrehung des zweiten Lenkelements 4 mitdreht. Bevorzugt kann vorgesehen sein, dass das Kolbenelement 61 und das zweite Lenkelement 4 jeweils in einer Ebenen verdrehbar sind, welche beiden Ebenen zueinander parallel sind.

Die vom Winkel zwischen Zugfahrzeug und Fahrzeuganhänger 2 abhängige Information, also die Winkelinformation, wird dabei in ein Drucksignal einer Flüssigkeit, insbesondere einer Hydraulikflüssigkeit, umgewandelt. Das Signal ist hiebei nicht elektrisch sondern mechanisch ausgebildet. Vorteilhafterweise wird die dabei zur Verdrehung der Räder benötigte Leistung direkt vom ersten Anlenkpunkt 11 auf die Zwangslenkung 1 übertragen, wobei keine weitere Energiezufuhr zum Zwangslenken benötigt wird. Vorteilhaft dabei ist, dass insbesondere der Nehmerzylinder dabei nicht mit weiterer Energie versorgt werden muss, womit der Nehmerzylinder nicht an eine Versorgung des Zugfahrzeuges angeschlossen werden muss.

In diesem Zusammenhang kann vorgesehen sein, dass der erste Flüssigkeitsbehälter 6 wenigstens bereichsweise kreisförmig um den zweiten Anlenkpunkt 12 angeordnet ist. Vorteilhaft dabei ist, dass die Winkelinformation dabei im Bereich des zweiten Anlenkpunkts 12 besonders einfach ins mechanische Signal umgewandelt werden kann, wobei das Kolbenelement 61 bei einer Änderung des Winkels zwischen dem Zugfahrzeug und dem Fahrzeuganhänger 2 im Wesentlichen verdreht wird.

Vorteilhafterweise kann vorgesehen sein, dass das erste Kolbenelement 61 mit dem zweiten Lenkelement 4 mechanisch verbunden ist, wie dies in Fig. 3 und 4 dargestellt ist. Hierbei kann das Kolbenelement 61 fest mit der zweiten Anlenkvorrichtung 41 verbunden sein und kann bei Winkeländerung der zweiten Anlenkvorrichtung 41 mit dieser mitdrehen.

In vorteilhafter Weiterbildung kann vorgesehen sein, dass ein zweiter Flüssigkeitsbehälter vorgesehen ist, und dass ein zweites Kolbenelement bewegbar in dem zweiten Flüssigkeitsbehälter angeordnet ist und dass das erste Kolbenelement 61 und das zweite Kolbenelement mit einem Getriebe verbunden sind. Der zweite Flüssigkeitsbehälter bildet hiebei einen zweiten Geber aus und kann weitere zwangsgelenkte Räder regeln. Vorteilhaft dabei ist, dass Räder einer ersten zwangslenkbaren Achse gemäß einer vorbestimmbaren ersten Übertragungsfunktion und Räder einer zweiten zwangslenkbaren Achse gemäß einer vorbestimmbaren - zur ersten Übertragungsfunktion unterschiedlichen - zweiten Übertragungsfunktion verdrehbar sind. Vorteilhafterweise können dabei - in Fahrtrichtung des Gespanns gesehen - verdrehbar hintereinander angeordnete Räder bei einem bestimmten Winkel zwischen Zugfahrzeug und Fahrzeuganhänger 2 unterschiedlich stark verdreht sein, welches bei mehreren Achsen des Fahrzeuganhängers 2 von Vorteil sein kann.

In diesem Zusammenhang kann in vorteilhafter Weise vorgesehen sein, dass das erste Kolbenelement 61 und das zweite Kolbenelement gegenüber dem Fahrzeuganhänger 2 um eine gemeinsame Achse drehbar angeordnet sind. Insbesondere kann diese gemeinsame Achse mit einer den zweiten Anlenkpunkt 12 ausbildenden Achse zusammenfallen. Vorteilhafterweise kann dabei die Zwangslenkung 1 des Fahrzeuganhängers 2 kompakt ausgebildet sein.

Wie in Fig. 8 dargestellt, kann in einer vorteilhaften Weiterbildung der Zwangslenkung 1 vorgesehen sein, dass am Fahrzeuganhänger 2 ein Fixierelement 7 zum Fixieren der Zwangslenkung 1 angeordnet ist. Das Fixierelement 7 kann dabei insbesondere geometrisch ähnlich einer den ersten Anlenkpunkt 11 ausbildenden Lenkvorrichtung des Zugfahrzeuges ausgebildet sein, womit insbesondere die erste Anlenkvorrichtung 31 am Fixierelement 7 fixiert werden kann.

Vorteilhafterweise kann vorgesehen sein, dass die Zwangslenkung 1 derart am Fixierelement 7 fixierbar ist, so dass die von der Zwangslenkung 1 gesteuerten Räder in einer Geradeausrichtung angeordnet sein können.

Alternativ dazu oder zusätzlich dazu kann die Zwangslenkung 1 derart am Fixierelement 7 fixierbar sein, dass die von der Zwangslenkung 1 die verdrehungsgeregelten Räder - sofern die Zwangslenkung 1 mittels des Fixierelements 7 fixiert ist - in einer anderen als der Geradeausrichtung angeordnet sind. Beispielsweise kann dabei eine sogenannte Parkposition der Räder des Fahrzeuganhängers 2 ausgebildet sein.

Anstatt oder zusätzlich zum Detektor 5, ersten Flüssigkeitsbehälter 6 und/oder zweiten Flüssigkeitsbehälter kann das Zwangslenkungssystem 1 den Geberzylinder 8 umfassen, welcher Geberzylinder 8 die Winkelinformation ebenso in das mechanische Signal, insbesondere in hydraulischen Druck, umwandeln kann und insbesondere wirkungsäquivalent zum ersten Flüssigkeitsbehälter 6 sein kann. Dabei kann der Geberzylinder 8 wenigstens teilweise die zweite Einheit ausbilden. Der Geberzylinder 8 kann dabei geometrisch ähnlich zu einem herkömmlichen Zwangslenkzylinder ausgebildet sein. Jedoch ist dabei vorgesehen, dass der Geberzylinder 8 nicht in unmittelbarem Kontakt zum Zugfahrzeug steht, also kontaktfrei zu diesem ausgebildet ist, sondern vielmehr mittels der ersten Einheit mit dem Zugfahrzeug kräftewechselwirkend verbunden, also kraftwirkverbunden, ist. Vorteilhaft dabei ist, dass dabei vorhandene Zwangslenkzylinder als Geberzylinder 8 weiterverwendet werden können. Vorteilhaft dabei ist weiters, dass der Geberzylinder 8 dabei dennoch derart angeordnet werden kann, dass der maximale Winkel zwischen Fahrzeuganhänger 2 und

Zugfahrzeug groß sein kann, insbesondere gegenüber einem zwangslenkungsfreien Fahrzeuganhänger unverändert groß sein kann.

Es ist vorgesehen, dass an einem Angriffspunkt 81 des zweiten Lenkelementes 4 der Geberzylinder 8 einerends angreift, wobei der Geberzylinders 8 andrehends ortsfest in Bezug auf den Fahrzeuganhänger 2 befestigt ist, und dass der Geberzylinder 8 mit Nehmerzylindern zur Verdrehung von Rädern des Fahrzeuganhängers wirkverbunden ist. Bei der dritten Ausführungsform ist der Geberzylinder 8 - in Gebrauchslage des Anhängers gesehen - oberhalb der Zugvorrichtung, insbesondere der Zugstange 22, angeordnet. Bei der vierten Ausführungsform ist der Geberzylinder 8 - in Gebrauchslage des Anhängers gesehen - bodennäher als die Zugvorrichtung, insbesondere die Zugstange 22, angeordnet.

Es ist in diesem Zusammenhang vorgesehen dass der Abstand des Angriffspunktes 81 von der zweiten Anlenkvorrichtung 41 mittels einer Einstellvorrichtung 43 vorgebbar ist. Eine vorteilhafte erste Ausbildung der Einstellvorrichtung 43 ist in Fig. 11 und 12 dargestellt. Bei dieser Ausbildung ist vorgesehen, dass im zweiten Lenkelement 4 ein langlochförmiger Durchbruch 44 ausgebildet ist und dass die Einstellvorrichtung 43 in den langlochförmiger Durchbruch 44 eingesteckt wird und innerhalb des Langlochs derart verschiebbar ist, dass der Abstand des Angriffspunktes 81 von der zweiten Anlenkvorrichtung 41 vorgebbar variiert werden kann, also kleiner oder größer ausgebildet sein kann. Vorteilhaft dabei ist, dass die Übertragungsfunktion der Zwangslenkung 1 derart verändert werden kann, womit das Verhältnis vom Winkel zwischen Zugfahrzeug und Fahrzeuganhänger 2 zu einem Verdrehwinkel der zwangsgelenkten Räder vorgebbar veränderlich ist, wobei je nach Abstand des Angriffspunktes 81 von der zweiten Anlenkvorrichtung 41 die Zwangslenkungs-Übertragungsfunktion, also der Räderverdrehungswinkel pro Grad zwischen Zugfahrzeug und

Fahrzeuganhänger 2 anders ausgebildet ist. Auch hiebei kann die Zwangslenkungs-Übertragungsfunktion als Kennlinie bezeichnet werden, wobei auch hiebei jeder vorbestimmbaren Stellung der Einstellvorrichtung 43 relativ zum zweiten Lenkelement 4 eine vorbestimmbare Kennlinie zuordenbar ist.

Insbesondere kann der langlochförmige Durchbruch 44 wenigstens bereichsweise einen zahnstangenähnlichen Bereich aufweisen. Dabei kann die Einstellvorrichtung 43 ein Zahnrad umfassen, mittels welchem Zahnrad die Einstellvorrichtung 43 stufenlos entlang des langlochförmigen Durchbruchs 44 verschoben werden kann. Zur Fixierung der jeweiligen Stellung der Einstellvorrichtung 43 kann diese mittels eines Klemmelementes am zweiten Lenkelement 4 geklemmt werden. Diese Klemmelement kann beispielsweise durch eine Beilagscheibe und eine Gewindemutter auf einem Gewindebereich der Einstellvorrichtung 43 ausgebildet sein. Vorteilhaft dabei ist die besonders einfache und stufenlose Verstellbarkeit des Abstandes des Angriffspunktes 81 von der zweiten Anlenkvorrichtung 41.

In Weiterbildung kann vorgesehen sein, dass wenigstens zwei Geberzylinder 8 im Wesentlichen parallel zueinander angeordnet sind. Beispielsweise kann einer der beiden Geberzylinder 8 oberhalb und einer der beiden Geberzylinder 8 unterhalb der Zugstange 22 angeordnet sein. Vorteilhaft dabei ist, dass der eine der beiden Geberzylinder 8 ein erstes zwangsgelenktes Räderpaar und der andere der beiden Geberzylinder 8 ein zweites zwangsgelenktes Räderpaar verdrehregeln kann, insbesondere mit zueinander verschiedenen Zwangslenkungs-Übertragungsfünktion verdrehregeln kann.

Da die zweite Einheit, also im Wesentlichen der Detektor 5, der Flüssigkeitsbehälter 6 und/oder der Geberzylinder 8, dabei nicht am Zugfahrzeug anmontiert oder vom Zugfahrzeug abmontiert werden muss, kann in vorteilhafter Weise vorgesehen sein, dass diese zweite Einheit im Wesentlichen unzugänglich angeordnet ist, also im Wesentlichen eingeschlossen sein kann, wozu vorgesehen sein kann, dass die zweite Einheit unter einer Abdeckung, einem Gehäuse angeordnet ist, eingehüllt und/oder eingegossen ist. Vorteilhaft dabei ist, dass der Detektor 5, der Flüssigkeitsbehälter 6 und/oder der Geberzylinder 8 vor Schmutzpartikeln geschützt und/oder schlaggeschützt angeordnet werden kann. Derart kann die Wartung des Detektors 5, des Flüssigkeitsbehälters 6 und/oder des Geberzylinders 8 kostenextensiv erfolgen und/oder eine hohe Standfestigkeit und Belastbarkeit dieser gewährleisten.

In einer vorteilhaften Weiterbildung kann vorgesehen sein, dass das Zwangslenkungssystem 1 fürs Zwangslenken nach rechts und fiirs Zwangslenken nach links getrennte Baugruppen umfasst. Dabei kann der Detektor 5, der erste Flüssigkeitsbehälter 6 und/oder der Geberzylinder 8 dementsprechend auf zwei getrennte Bauteile, also zwei alternative Detektoren, zwei alternative Flüssigkeitsbehälter bzw. zwei alternative Geberzylinder aufgeteilt werden. Vorteilhaft dabei ist, dass jedes dieser Bauteile weiter verkleinert werden kann.

In besonders vorteilhafter Weiterbildung kann vorgesehen sein, dass - in Wirkrichtung des Zwangslenkungssystems 1 gesehen - nach dem zweiten Anlenkpunkt 12 und vor dem ersten Flüssigkeitsbehälter 6 bzw. dem Geberzylinder 8 oder nach dem ersten Flüssigkeitsbehälter 6 bzw. dem Geberzylinder 8 und vor den Nehmerzylindern ein Stellzylinder angeordnet ist. Dieser Stellzylinder kann in vorteilhafter Weise zwei Wirkungen gewährleisten: Einerseits kann zum Kuppeln bzw. zum Entkuppeln der Zwangslenkung 1 der Stellzylinder kräftefrei gestellt werden, womit die Zwanglenkung 1 kräfteübertragungsfrei ausgebildet ist und die Position zwischen erstem Anlenkpunkt 11 und Räderstellung der zwangslenkbaren Räder nicht miteinander wechselwirken. Beispielsweise kann dazu der Stellzylinder druckfrei gestellt werden. Zur Wiederherstellung der Übertragungsfunktion der Zwangslenkung 1 kann der Stellzylinder kräfteübertragend gestellt werden, wozu der Stellzylinder mit Druck beaufschlagt werden kann. In dieser Stellung ist die Übertragungsfunktion der Zwangslenkung 1 und die Position zwischen erstem Anlenkpunkt 11 und der Räderstellung der zwangslenkbaren Räder können miteinander wechselwirken.

Besonders bevorzugt kann vorgesehen sein, dass das Leitungssystem im Bereich nach dem ersten Flüssigkeitsbehälter 6 und/oder dem Geberzylinder 8 eine erste Druckausgleichsvorrichtung und/oder eine zweite Druckausgleichsvorrichtung aufweist. Dabei kann vorgesehen sein, dass Druckspitzen in diesem Leitungssystem mit der Druckausgleichsvorrichtung und/oder der zweiten Druckausgleichsvorrichtung ausgeglichen werden. Vorteilhaft dabei ist, dass Schläge bzw. Überdrücke auf den dem ersten Flüssigkeitsbehälter 6 und/oder dem Geberzylinder 8, welche beim Fahren, insbesondere beim Fahren auf unebenem Grund, auftreten können, abgeschwächt, also ausgeglichen, an die Nehmerzylinder übertragen werden können. Dadurch können Spannungsspitzen in den Leitungen, insbesondere in den Hydraulikleitungen, sowie im Flüssigkeitsbehälter 6 bzw. im Geberzylinder 8 und/oder in den Nehmerzylindern vermieden und/oder verringert werden. Vorteilhaft dabei ist, dass die hohe Lebensdauer und/oder die Geländegängigkeit des Zwangslenkungssystems 1 gewährleistet sein kann.

Die erste Druckausgleichsvorrichtung und/oder die zweite Druckausgleichsvorrichtung können dazu als 80bar-Druckspeicher und/oder als 50bar-Druckspeicher ausgebildet sein.

In vorteilhafter Weise kann vorgesehen sein, dass die Zwangslenkung 1 einen Drucksensor zum Ermitteln des Drucks, insbesondere des Hydraulikdrucks, in der Zwangslenkung 1 umfasst. Der Drucksensor kann den Druck, insbesondere den Hydraulikdruck, in der Zwangslenkung 1 erfassen und an eine Kontrolleinrichtung weiterleiten. Vorteilhaft dabei ist, dass der Druck dabei laufend, also im Wesentlichen ohne größere Zeitverzögerung, kontrolliert werden kann, wobei insbesondere ein zu niedriger Druck, also ein Druckabfall in der Zwangslenkung 1 beispielsweise auf unter 10bar, oder ein zu hoher Druck, also ein Druckanstieg in der Zwangslenkung 1 beispielsweise auf über 100bar, einem Fahrer des Zugfahrzeuges, beispielsweise mittels einer Warnmeldung, gemeldet werden kann. Dazu kann der Drucksensor mit einem Warnsystem, welches insbesondere von der Kontrolleinrichtung umfasst sein kann, verbunden sein. Dies kann zusätzliche Betriebssicherheit der Zwangslenkung 1 gewährleisten.

In diesem Zusammenhang können ein oder mehrere Drucksensoren ausgebildet sein und am ersten Flüssigkeitsbehälter 6, am zweiten Flüssigkeitsbehälter, am Nehmerzylinder, am Geberzylinder 8, an der ersten Verbindungsleitung 65 und/oder an der zweiten Verbindungsleitung 66 angeordnet sein. Da diese Bauteile der Zwangslenkung 1 - sofern in der Zwangslenkung 1 vorgesehen - zusammenwirken, herrscht in diesen Bauteilen üblicherweise in etwa der gleiche Druck.

Bei einer anderen vorteilhaften Ausgestaltung des Fahrzeuganhängers 2 kann dieser als Sattelanhänger ausgebildet sein. Dabei ist die Zugvorrichtung anstatt als Zugstange 22 vielmehr als ein Eindringkörper ausgebildet, wobei der Eindringkörper zum bereichsweisen Eindringen in eine am Zugfahrzeug ausgebildete Sattelplatte ausgebildet ist. Das Zugfahrzeug kann in diesem Zusammenhang als Sattelzugmaschine bezeichnet werden. Der Sattelanhänger kann auch als Sattelauflieger bzw. als Trailer bezeichnet werden. Dabei kann der Sattelanhänger die Zwangslenkung 1 umfassen, wobei der ersten Anlenkpunkt 11 insbesondere an der Sattelplatte angeordnet sein kann und wobei der zweite Anlenkpunkt 12 an dem Sattelanhänger angeordnet sein kann. Auch hiebei kann die Zwangslenkung 1 in vorteilhafte Weise den Detektor 5, den ersten Flüssigkeitsbehälter 6, den zweiten Flüssigkeitsbehälter und/oder den wenigstens einen Geberzylinder 8 umfassen.

## Patentansprüche

1. Zwangslenkung (1) für die Lenkung eines an ein Zugfahrzeug gekuppelten Fahrzeuganhängers (2), mit einem ersten Anlenkpunkt (11), welcher ortsfest in Bezug auf das Zugfahrzeug ist, und einem zweiten Anlenkpunkt (12), welcher ortsfest in Bezug auf den Fahrzeuganhänger (2) ist, wobei ein erstes Lenkelement (3) eine erste Anlenkvorrichtung (31) zum Angreifen an dem ersten Anlenkpunkt (11) aufweist, wobei in einem ersten festen Abstand von der ersten Anlenkvorrichtung (31) das erste Lenkelement (3) unter Ausbildung eines Drehpunktes (13) drehbar mit einem zweiten Lenkelement (4) verbunden ist und das zweite Lenkelement (4) in einem zweiten festen Abstand von dem Drehpunkt (13) eine zweite Anlenkvorrichtung (41) zum Angreifen mit dem zweiten Anlenkpunkt (12) aufweist, **dadurch gekennzeichnet, dass** an einem Angriffspunkt (81) des zweiten Lenkelementes (4) ein Geberzylinder (8) einerends angreift, wobei der Geberzylinders (8) anderends ortsfest in Bezug auf den Fahrzeuganhänger (2) befestigt ist, und dass der Geberzylinder (8) mit Nehmerzylindern zur Verdrehung von Rädern des Fahrzeuganhängers wirkverbunden ist, und wobei der Abstand des Angriffspunktes (81) von der zweiten Anlenkvorrichtung (41) mittels einer Einstellvorrichtung (43) vorgebbar ist.

2. Zwangslenkung nach Anspruch 1, **dadurch gekennzeichnet, dass** im zweiten Lenkelement (4) ein langförmiger Durchbruch (44) ausgebildet ist, und dass die Einstellvorrichtung (43) in den langförmigen Durchbruch (44) eingesteckt ist und innerhalb des langförmigen Durchbruchs (44) derart verschiebbar ist, dass der Abstand des Angriffspunktes (81) von der zweiten Anlenkvorrichtung (41) vorgebbar variiert werden kann.

3. Zwangslenkung nach Anspruch 2, **dadurch gekennzeichnet, dass** der langlochförmige Durchbruch (44) wenigstens bereichsweise einen zahnstangenähnlichen Bereich aufweist.

4. Zwangslenkung nach einem der Ansprüche 1 bis 3, **dadurch gekennzeichnet, dass** wenigstens zwei Geberzylinder (8) im Wesentlichen parallel zueinander angeordnet sind.

5. Zwangslenkung nach einem der Ansprüche 1 bis 4, **dadurch gekennzeichnet, dass** ein Detektor (5) zur Detektion der Position des zweiten Lenkelementes (4) relativ zum zweiten Anlenkpunkt (12) vorgesehen ist, und dass der Detektor (5) mit einer Einstellvorrichtung zur Verdrehung von Rädern des Fahrzeuganhängers (2) wirkverbunden ist.

6. Zwangslenkung nach einem der Ansprüche 1 bis 5, dadurch gekennzeichet, dass mit dem zweiten Lenkelement (4) zumindest ein erstes Kolbenelement (61) verbunden ist, dass das erste Kolbenelement (61) bewegbar in einem ersten Flüssigkeitsbehälter (6) angeordnet ist und diesen in zwei Bereiche (62) teilt, und dass mit den beiden Bereichen (62) Nehmerzylinder zur Verdrehung von Rädern des Fahrzeuganhängers (2) wirkverbunden sind.

7. Zwangslenkung nach Anspruch 6, **dadurch gekennzeichnet, dass** der erste Flüssigkeitsbehälter (6) wenigstens bereichsweise kreisförmig um den zweiten Anlenkpunkt (12) angeordnet ist.

8. Zwangslenkung nach Anspruch 6 oder 7, **dadurch gekennzeichnet, dass** das erste Kolbenelement (61) mit dem zweiten Lenkelement (4) mechanisch verbunden ist.

9. Zwangslenkung nach einem der Ansprüche 6 bis 8, **dadurch gekennzeichnet, dass** ein zweiter Flüssigkeitsbehälter vorgesehen ist, und dass ein zweites Kolbenelement bewegbar in dem zweiten Flüssigkeitsbehälter angeordnet ist und dass das erste Kolbenelement (61) und das zweite Kolbenelement mit einem Getriebe verbunden sind.

10. Zwangslenkung nach Anspruch 9, **dadurch gekennzeichnet, dass** das erste Kolbenelement (61) und das zweite Kolbenelement gegenüber dem Fahrzeuganhänger (2) um eine gemeinsame Achse drehbar angeordnet sind.

11. Zwangslenkung nach einem der Ansprüche 1 bis 10, **dadurch gekennzeichnet, dass** am Fahrzeuganhänger (2) ein Fixierelement (7) zum Fixieren der Zwangslenkung (1) angeordnet ist.

12. Zwangslenkung nach Anspruch 11, **dadurch gekennzeichnet, dass** die Zwangslenkung (1) derart am Fixierelement (7) fixierbar ist, so dass die von der Zwangslenkung (1) gesteuerten Räder in einer Geradeausrichtung angeordnet sind.

13. Zwangslenkung nach Anspruch 11 oder 12, **dadurch gekennzeichnet, dass** die erste Anlenkvorrichtung (31) am Fixierelement (7) fixierbar ist.

14. Zwangslenkung nach einem der Ansprüche 1 bis 13, **dadurch gekennzeichnet, dass** die Zwangslenkung (1) einen Drucksensor zum Ermitteln des Drucks, insbesondere des Hydraulikdrucks, in der Zwangslenkung (1) umfasst.

15. Zwangslenkung nach Anspruch 14, **dadurch gekennzeichnet, dass** der Drucksensor mit einem Warnsystem verbunden ist.

## Claims

1. A forced steering system (1) for steering a trailer (2) hitched to a tractor vehicle, comprising a first link point (11) which is stationary with respect to the tractor vehicle, and a second link point (12) which is stationary with respect to the trailer (2), wherein a first steering element (3) comprises a first link apparatus (31) for attack on the first link point (11), wherein the first steering element (3), at a first fixed distance from the first link apparatus (31), is rotatably connected to the second steering element (4) by forming a pivot point (13), and the second steering element (4), at a second fixed distance from the pivot point (13), comprises a second link apparatus (41) for attack with the second link point (12), **characterized in that** a master cylinder (8) attacks at one end on an attack point (81) of the second steering element (4), wherein the master cylinder (8) is fixed at the other end in a stationary manner with respect to the trailer (2), and that the master cylinder (8) is operatively connected to slave cylinders for twisting wheels of the trailer, and wherein the distance of the attack point (81) from the second steering apparatus (41) can be predetermined by means of an adjusting apparatus (43).

2. A forced steering system according to claim 1, **characterized in that** an elongated breakthrough (11) is arranged in the second steering element (4), and that the adjusting apparatus (43) is inserted in the elongated breakthrough (44) and is displaccable within the elongated breakthrough (44) in such a way that the distance of the attack point (81) from the second link apparatus (41) can be varied in a predeterminable manner.

3. A forced steering system according to claim 2, **characterized in that** the elongated breakthrough (44) has a rack-like area at least in sections.

4. A forced steering system according to one of the claims 1 to 3, **characterized in that** at least two master cylinders (8) are arranged at least substantially parallel with respect to each other.

5. A forced steering system according to one of the claims 1 to 4, **characterized in that** a detector (5) is provided for the detection of the position of the second steering element (4) relative to the second link point (12), and that the detector (5) is operatively connected to an adjusting apparatus for twisting wheels of the trailer (2).

6. A forced steering system according to one of the claims 1 to 5, **characterized in that** at least one first piston element (61) is connected to the second steering element (4), that the first piston element (61) is movably arranged in a first fluid container (6) and divides said container into two regions (62), and that slave cylinders for twisting wheels of the trailer (2) are operatively connected to the two regions (62).

7. A forced steering system according to claim 6, **characterized in that** the first fluid container (6) is arranged at least in sections circularly around the second link point (12).

8. A forced steering system according to claim 6 or 7, **characterized in that** the first piston element (61) is mechanically connected to the second steering element (4).

9. A forced steering system according to one of the claims 6 to 8, **characterized in that** a second fluid container is provided, and that a second piston element is movably arranged in the second fluid container, and that the first piston element (61) and the second piston element are connected to a gear.

10. A forced steering system according to claim 9, **characterized in that** the first piston element (61) and the second piston element are rotatably arranged about a common axis in relation to the trailer (2).

11. A forced steering system according to one of the claims 1 to 10, **characterized in that** a fixing element (7) for fixing the forced steering system (1) is arranged on the trailer (2).

12. A forced steering system according to claim 11, **characterized in that** the forced steering system (1) can be fixed to the fixing element (7) so that the wheels controlled by the forced steering system (1) are arranged in a straight direction.

13. A forced steering system according to claim 11 or 12, **characterized in that** the first link apparatus (31) can be fixed to the fixing element (7).

14. A forced steering system according to one of the claims 1 to 13, **characterized in that** the forced steering system (1) comprises a pressure sensor for determining the pressure, especially the hydraulic pressure, in the forced steering system (1).

15. A forced steering system according to claim 14, **characterized in that** the pressure sensor is connected to a warning system.

## Revendications

1. Direction asservie (1) pour la direction d'une remorque de véhicule (2) attelée à un véhicule, avec un premier point d'articulation (11) qui est fixe par rapport au véhicule tracteur et avec un deuxième point d'articulation (12) qui est fixe par rapport à la remorque de véhicule (2), un premier élément de direction (3) présentant un premier dispositif d'articulation (31) destiné à se mettre en prise sur le premier point d'articulation (11), le premier élément de direction (3) étant relié, à une première distance fixe du premier dispositif d'articulation (31), à un deuxième élément de direction (4) avec possibilité de rotation en formant un point de pivotement (13) et le deuxième élément de direction (4) présentant à une deuxième distance fixe du point de pivotement (13) un deuxième dispositif d'articulation (41) destiné à se mettre en prise avec le deuxième point d'articulation (12), **caractérisée en ce qu'**un maître-cylindre (8) se met en prise en un point de prise (81) du deuxième élément de direction (4), le maître-cylindre (8) étant fixé à l'autre extrémité de manière fixe par rapport à la remorque de véhicule (2), et **en ce que** le maître-cylindre (8) est en liaison active avec des cylindres récepteurs pour faire tourner des roues de la remorque de véhicule, la distance entre le point de prise (81) et le deuxième dispositif d'articulation (41) pouvant être prédéfinie au moyen d'un dispositif de réglage (43).

2. Direction asservie selon la revendication 1, **caractérisée en ce qu'**une ouverture allongée (44) est formée dans le deuxième élément de direction (4) et **en ce que** le dispositif de réglage (43) est inséré dans l'ouverture allongée (44) et peut être déplacé à l'intérieur de l'ouverture allongée (44) de telle manière que la distance entre le point de prise (81) et le deuxième dispositif d'articulation (41) puisse être modifiée de manière prédéfinie.

3. Direction asservie selon la revendication 2, **caractérisée en ce que** l'ouverture allongée (44) présente au moins par zones une zone semblable une crémaillère.

4. Direction asservie selon l'une des revendications 1 à 3, **caractérisée en ce qu'**au moins deux maîtres-cylindres (8) sont disposés de façon sensiblement parallèle l'un à l'autre.

5. Direction asservie selon l'une des revendications 1 à 4, **caractérisée en ce qu'**il est prévu un détecteur (5) pour la détection de la position du deuxième élément de direction (4) par rapport au deuxième point d'articulation (12) et **en ce que** le détecteur (5) est en liaison active avec un dispositif de réglage destiné à faire pivoter des roues de la remorque de véhicule (2).

6. Direction asservie selon l'une des revendications 1 à 5, **caractérisée en ce qu'**au moins un premier élément de piston (61) est relié au deuxième élément de direction (4), **en ce que** le premier élément de piston (61) est disposé de manière mobile dans un premier réservoir de liquide (6) et partage celui-ci en deux zones (62) et **en ce que** des cylindres récepteurs sont en liaison active avec les deux zones (62) pour faire pivoter des roues de la remorque de véhicule (2).

7. Direction asservie selon la revendication 6, **caractérisée en ce que** le premier réservoir de liquide (6) est disposé au moins par zones en forme de cercle autour du deuxième point d'articulation (12).

8. Direction asservie selon la revendication 6 ou 7, **caractérisée en ce que** le premier élément de piston (61) est relié mécaniquement au deuxième élément de direction (4).

9. Direction asservie selon l'une des revendications 6 à 8, **caractérisée en ce qu'**il est prévu un deuxième réservoir de liquide et **en ce qu'**un deuxième élément de piston est disposé de manière mobile dans le deuxième réservoir de liquide et **en ce que** le premier élément de piston (61) et le deuxième élément de piston sont reliés avec un engrenage.

10. Direction asservie selon la revendication 9, **caractérisée en ce que** le premier élément de piston (61) et le deuxième élément de piston sont disposés de façon pivotante autour d'un axe commun par rapport à la remorque de véhicule (2).

11. Direction asservie selon l'une des revendications 1 à 10, **caractérisée en ce qu'**un élément de fixation (7) destiné à fixer la direction asservie (1) est disposé sur la remorque de véhicule (2).

12. Direction asservie selon la revendication 11, **caractérisée en ce que** la direction asservie (1) peut être fixée sur l'élément de fixation (7) de telle manière que les roues commandées par la direction asservie (1) soient orientées pour marcher tout droit.

13. Direction asservie selon la revendication 11 ou 12, **caractérisée en ce que** le premier dispositif d'articulation (31) peut être fixé sur l'élément de fixation (7).

14. Direction asservie selon l'une des revendications 1 à 13, **caractérisée en ce que** la direction asservie (1) comprend un capteur de pression pour déterminer la pression, en particulier la pression hydraulique, dans la direction asservie (1).

15. Direction asservie selon la revendication 14, **caractérisée en ce que** le capteur de pression est relié à un système d'avertissement.
